# EUROPEAN PATENT APPLICATION

(11) **EP 0 691 235 A1**
(43) Date of publication of application: **10.01.1996**
(21) Application number: 94910609.0
(22) Date of filing: 03.02.1994
(51) Int. Cl.: B60K 41/02

(54) **AUTOMATIC CONTROL DEVICE FOR A VEHICLE CLUTCH**

(71) Applicant: Abdurakhmanov, Abdulmumin Abdulkadyrovich, Moskovskaya obl., Serpukhov, 142200 (RU); Sitnikov, Petr Fedotovich, Moskovskaya obl., Serpukhov, 142200 (RU); Molotov, Sergei Jurievich, Moskovskaya obl., Serpukhov, 142200 (RU); Tarasov, Jury Viktorovich, Moskovsakya obl., Serpukhov, 142200 (RU)
(72) Inventor: Abdurakhmanov, Abdulmumin Abdulkadyrovich, Moskovskaya obl., Serpukhov, 142200 (RU); Sitnikov, Petr Fedotovich, Moskovskaya obl., Serpukhov, 142200 (RU); Molotov, Sergei Jurievich, Moskovskaya obl., Serpukhov, 142200 (RU); Tarasov, Jury Viktorovich, Moskovsakya obl., Serpukhov, 142200 (RU)
(74) Representative: Pellmann, Hans-Bernd, Dipl.-Ing.
(86) International application number: RU9400018
(87) International publication number: WO9521072

(57) **Abstract**

The invention relates to automatic control devices for vehicle systems, in particular clutches. Signals from a sensor (1) measuring the angular speed of the engine shaft and from the sensor (3) which indicates the vehicle's speed incorporate the signals from a unit (12) which forcibly disengages the clutch and from a binary sensor (23) which detects the initial position of the control pedal of the carburettor throttle valve. The servo-electromagnet (14, 15) has control and booster coils and its armature is connected kinematically to the clutch drive.

## Description

### Technical Field

This invention relates in general to automatic control systems of units of transport vehicles and has particular reference to friction clutches of motor vehicles.

### Background Art

Errors committed by motor vehicle drivers when controlling friction clutches result in discomfortable jerking motion, overheating of the clutch components, and dynamic overloads in the transmission of a transport vehicle, which reduces the service life of the parts and units engaged in torque transmission from the vehicle engine to the wheels.

To obviate an adverse effect of driver's errors on transport vehicles the latter are equipped with automatic clutch control systems.

One of the state-of-the-art automatic friction clutch control device of a transport vehicle is known to comprise sensors adapted to interact with the clutch control pedal in its definite position, a sensor of angular velocity of a transport vehicle engine crankshaft, a sensor of angular velocity of the clutch driven plate, and a carburetor throttle position sensor, as well as a logic device adapted for realizing the rate of clutch engagement preset in the program, by way of an electric-motor drive (FR, A1, No.2,652,547, B 60 K 23/02, 1989).

Automation of friction clutch control has gained widespread application in transport vehicles aimed at use by invalid persons suffering from dysfunction of the limbs, in particular, with amputated legs. As a rule, such drivers cannot steer transport vehicles having conventional number and arrangement of controls, since the load on the sound limbs are much increased.

Adaptation of transport vehicles equipped with automatic friction clutch control devices to drivers with dysfunction of the lower limbs involves a possibility of pedal-free control.

Another automatic clutch control device is known from the background art, wherein a vacuum drive is used. The device comprises a positive clutch disengager situated on the gearshift lever of the transport vehicle, a transducer of engine crankshaft angular velocity, a transport vehicle brake application sensor, and a logic device connected to the control valve elements (FR, A1, No.2,386,137, B 60 K 41/22, 1978).

Further progress in automatic clutch control devices of transport vehicles runs along the path of eliminating any delays in engagement during operation occurring due to sluggishness of the vacuum drive, its dependence on the angular shaft velocity, and atmospheric pressure, as well as towards a possibility of braking a transport vehicle with the engine when the accelerator pedal is released.

The features mentioned above are possessed by an automatic clutch control device of a transport vehicle most similar to the herein-proposed device as for technical essence and attainable result, said device comprising an engine crankshaft angular velocity sensor connected to a frequency-to-analog converter which in turn is connected, through a current regulator and a current amplifier, to the coil of a servo-solenoid having its armature operatively associated with the clutch actuating mechanism, as well as the positive clutch disengager situated on the gearshift lever and connected to the coil of a servo-solenoid (SU, A1, No.929,471, B 60 K 41/02, 1982).

### Disclosure of the Invention

The present invention has for its principal object to provide a clutch control device featured by increased comfort, reliability, and a prolonged service life attainable due to approximation of the characteristics of a servo-solenoid to the required ones and modification of the principle of clutch engagement control to suit the environmental conditions that vary during acceleration of the vehicle and gear-shifting and act on the transport vehicle.

The foregoing object is accomplished due to the fact that an automatic clutch control device of a transport vehicle, comprising an engine crankshaft angular velocity sensor connected, through a frequency-to-analog converter, a current regulator and a current amplifier, to the coil of a servo-solenoid having its armature operatively associated with a clutch actuating mechanism, and a positive clutch disengager situated on a gearshift lever and connected to the servo-solenoid coil, is additionally provided with a two-level sensor of carburetor throttle pedal initial position, a switch element, a single pulse generator, a switching current amplifier, a single pulse generator trigger device, a clutch interlocking control relay, a clutch interlocking control relay readjustment unit, an AND gate, a first diode, a second diode, and a switching device; the frequency-to-analog converter is a single-input one and the servo-solenoid coil has a control winding and a forcing winding, of which the latter is connected to the output circuit of the switching current amplifier whose input is connected to the output of the single-pulse generator having its input connected to the output of the single pulse generator trigger device, the output of the single-pulse generator is connected, through the first diode, to the first input of the current regulator whose second input is connected, through the second diode, to the output of the single-input frequency-to-analog converter, the output of the current amplifier is connected to the control winding of the servo-solenoid coil, the noninverting output of the two-level sensor of carburetor throttle pedal position is connected, through the switch element, to the first input of the current regulator, the first input of the clutch interlocking control relay is connected, via the clutch interlocking control relay readjustment unit, to the output of the current amplifier, while the output of the clutch interlocking control relay is connected to the input of the switching device, to the first input of the single pulse generator trigger device, and to the first input of the AND gate, to the second input of which is connected the inverting output of the two-level sensor, connected to the output of the AND gate is the second input of the single pulse generator trigger device, while connected to the third input of the single pulse generator trigger device is the positive clutch disengager; the output of the switching device is connected to the second input of the current regulator, and the output of the single-input frequency-to-analog converter is connected to the second input of the clutch interlocking control relay.

Further reduction of delays in clutch engagement concerned with an extended possibility of correcting the principle of clutch engagement control is attained in another embodiment of the device proposed herein, according to which an automatic clutch control device of a transport vehicle, comprising an engine crankshaft angular velocity sensor connected, through a frequency-to-analog converter, a current regulator, and a current amplifier, to the coil of a servo-solenoid having its armature operatively associated with a clutch actuating mechanism, and a positive clutch disengager situated on a gearshift lever and connected to the servo-solenoid coil, is additionally provided with a two-level sensor of carburetor throttle pedal initial position, a switch element, a single pulse generator, a switching current amplifier, a single pulse generator trigger device, a clutch interlocking control relay, a clutch interlocking control relay readjustment unit, an AND gate, a first diode, a second diode, a switching device, a transport vehicle speed-sensing device, an additional frequency-to-analog converter, and an adder; the frequency-to-analog converter is a double-input one and the servo-solenoid coil has a control winding and a forcing winding, of which the latter is connected to the output circuit of the switching current amplifier whose input is connected to the output of the single-pulse generator having its input connected to the output of the single pulse generator trigger device, the output of the single-pulse generator is connected, through the first diode, to the first input of the current regulator, the output of the current amplifier is connected to the control winding of the servo- solenoid coil, the noninverting output of the two-level sensor of carburetor throttle pedal position is connected, through the switch element, to the first input of the current regulator, the first input of the clutch interlocking control relay is connected, via the clutch interlocking control relay readjustment unit, to the output of the current amplifier, while the output of the clutch interlocking control relay is connected to the input of the switching device, to the first input of the single pulse generator trigger device, and to the first input of the AND gate, to the second input of which is connected the inverting output of the two-level sensor, while connected to the output of the AND gate is the second input of the single pulse generator trigger device, and connected to the third input of the single pulse generator trigger device is the positive clutch disengager; the output of the switching device is connected to the second input of the current regulator, and the transport vehicle speed-sensing unit is connected to the input of the additional frequency-to-analog converter whose output is connected to the second input of the clutch interlocking control relay and to the first input of the adder, while connected to the second input of the adder is the output of the double-input frequency-to-analog converter and the output of the adder is connected, through the second diode, to the second input of the current regulator; the engine crankshaft angular velocity sensor is connected to the first input of the double-input frequency-to-analog converter, to the second input of which is connected the noninverting output of the two-level sensor.

A third embodiment of the herein-proposed device makes it possible not only to secure all of the advantages characteristic of the preceding embodiments but also to avoid errors in estimating the signals generated by the engine crankshaft angular velocity sensor and the transport vehicle speed sensing unit by providing comparison of the signals of both before converting the control signal into a d.c. signal.

With said object in view, an automatic clutch control device of a transport vehicle, comprising an engine crankshaft angular velocity sensor connected, through a frequency-to-analog converter, a current regulator, and a current amplifier, to the coil of a servo-solenoid having its armature operatively associated with a clutch actuating mechanism, and a positive clutch disengager situated on a gearshift lever and connected to the servo-solenoid coil, is additionally provided with a transport vehicle speed sensing unit, a comparison circuit, a two-level sensor of carburetor throttle pedal initial position, a switch element, a single pulse generator, a switching current amplifier, a single pulse generator trigger device, a clutch interlocking control relay, a clutch interlocking control relay readjustment unit, an AND gate, and a switching device; the frequency-to-analog converter is a double-input one and the servo-solenoid coil has a control winding and a forcing winding, of which the latter is connected to the output circuit of the switching current amplifier whose input is connected to the output of the single-pulse generator having its input connected to the output of the single pulse generator trigger device, the output of the single-pulse generator is connected, through the first diode, to the first input of the current regulator, the second input of which is connected, through the second diode, to the output of the double-input frequency-analog converter, the output of the current amplifier is connected to the control winding of the servo-solenoid coil, the noninverting output of the two-level sensor is connected, through the switch element, to the first input of the current regulator, the first input of the clutch interlocking control relay is connected via the clutch interlocking control relay readjustment unit, to the output of the current amplifier, while the output of the clutch interlocking control relay is connected to the input of the switching device, to the first input of the single pulse generator trigger device, and to the first input of the AND gate, to the second input of which is connected the inverting output of the two-level sensor, while connected to the output of the AND gate is the second input of the single pulse generator trigger device, and connected to the third input of the single pulse generator trigger device is the positive clutch disengager; the output of the switching device is connected to the second input of the current regulator, and the engine crankshaft angular velocity sensor and the transport vehicle speed-sensing unit are connected to the inputs of the comparison circuit whose output is connected to the first input of the double-input frequency-to-analog converter whose second input is connected to the noninverting output of the two-level sensor, and the output of the converter is connected to the second input of the clutch interlocking control relay.

In a fourth embodiment of the herein-proposed device its construction is much simplified and the most accurate realization of the principle of clutch engagement control is attained due to effecting said control against the sum of signals generated by the engine crankshaft angular velocity sensor and the transport vehicle speed sensing unit.

With the foregoing object in view, an automatic clutch control device of a transport vehicle, comprising an engine crankshaft angular velocity sensor connected, through a frequency-to-analog converter, a current regulator, and a current amplifier, to the coil of a servo-solenoid having its armature operatively associated with a clutch actuating mechanism, and a positive clutch disengager situated on a gearshift lever and connected to the servo-solenoid coil, is additionally provided with a transport vehicle speed sensing unit, a comparator, a two-level sensor of carburetor throttle pedal initial position a switch element, a single pulse generator, a switching current amplifier, and a single pulse generator trigger device; the frequency-to-analog converter is a double-input one and the servo-solenoid coil has a control winding and a forcing winding, of which the latter is connected to the output circuit of the switching current amplifier whose input is connected to the output of the single-pulse generator having its input connected to the output of the single pulse generator trigger device, the output of the single-pulse generator is connected, through the first diode, to the first input of the current regulator, the second input of which is connected, through the second diode, to the output of the double-input frequency-analog converter, the output of the current amplifier is connected to the control winding of the servo-solenoid coil, the noninverting output of the two-level sensor is connected, through the switch element, to the first input of the current regulator whose output is connected to the first input of the single pulse generator trigger device, the inverting input of the two-level sensor is connected to the second input of the single pulse generator trigger device, the positive clutch disengager is connected to the third input of the single pulse generator trigger device; the engine crankshaft angular velocity sensor and the transport vehicle speed sensing unit are connected to the inputs of the comparator whose output is connected to the first input of the double-input frequency-to-analog converter, the second input of which is connected to the noninverting output of the two-level sensor of carburetor throttle pedal initial position.

### Brief Description of the Drawings

Further objects and many of the attendant advantages of the present invention will be readily appreciated as the same becomes better understood by reference to the following detailed description when considered in connection with the accompanying drawings, wherein:
FIG.1 presents a block diagram of a first embodiment of the automatic clutch control device of a transport vehicle, according to the invention;
FIG.2 is a graphic representation of the proportionality factor of the servo-solenoid coil vs engine crankshaft angular velocity, according to the first embodiment of the automatic clutch control device of the present invention;
FIG.3 presents a block diagram of a second embodiment of the automatic clutch control device of a transport vehicle, according to the invention;
FIG.4 is a graphic representation of the proportionality factor of the servo-solenoid coil vs the sum of engine crankshaft angular velocity and transport vehicle traveling speed, according to the second embodiment of the automatic clutch control device of the present invention;
FIG.5 presents a block diagram of a third embodiment of the automatic clutch control device of a transport vehicle, according to the invention;
FIG.6 is a graphic representation of the proportionality factor of the servo-solenoid coil vs angular velocity of transport vehicle engine crankshaft;
FIG.7 presents a block diagram of a fourth embodiment of the automatic clutch control device of a transport vehicle, according to the invention;

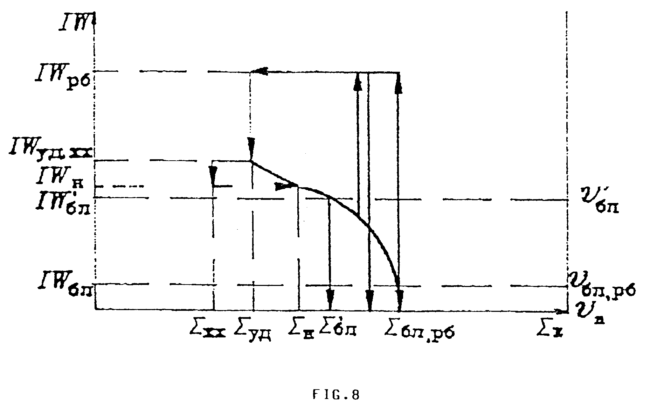

FIG.8 is a graphic representation of the proportionality factor of the servo-solenoid coil vs the sum of engine crankshaft angular velocity and transport vehicle traveling speed, according to the fourth embodiment of the automatic clutch control device of the present invention.

### Embodiments of the Invention

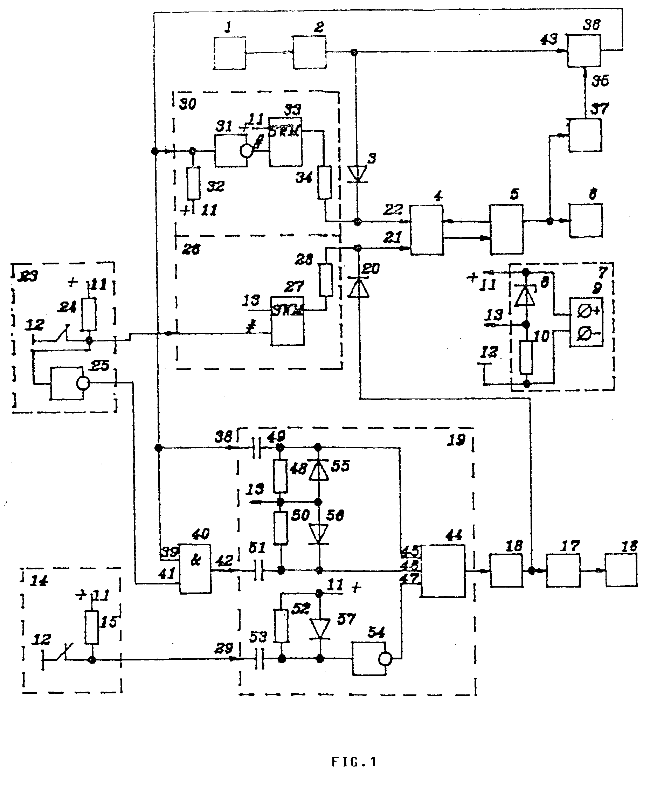

In the automatic clutch control device of FIG.1 an engine crankshaft angular velocity sensor 1 is connected, through a single-input frequency-to-analog converter 2, a second diode 3, a current regulator 4, and a current amplifier 5, to a control winding 6 of the coil of a servo-solenoid whose armature is operatively associated with the clutch actuating mechanism (not shown). A stabilized supply voltage unit 7 for the nonpower portion of the electronic circuitry comprises a stabilizer diode 8 connected to an on-board power source 9 through a first resistor 10, as well as a positive terminal 11, a chassis ground terminal 12, and an intermediate terminal 13, the latter being connected to a line interconnecting the first resistor 10 and the stabilizer diode 8. A positive clutch disengager 14 is located on the gearshift lever (not shown) and is connected, through one of its terminals, to the chassis ground terminal 12, and with the other terminal thereof through a second resistor 15, to the positive terminal 11 of the stabilized supply voltage unit 7. The forcing winding 16 of the servo-solenoid coil is connected to the output circuit of the switching current amplifier 17 whose input is connected to the output of the single-pulse generator 18 having its input connected to the output of the single pulse generator trigger device 19. The output of the single-pulse generator 18 is connected, through a first input 21 of the current regulator 4 whose second input 22 is connected, through the second diode 3, to the output of the single-input frequency-to-analog converter 2. A two-level sensor 23 of carburetor throttle pedal initial position has electric terminals one of which is connected to the chassis ground terminal 12 of the stabilized supply voltage unit 7, while the other terminal is connected, through a third resistor 24, to the positive terminal 11 of the stabilized supply voltage unit 7 and, through a first inverter 25, to the inverting output of the two-level sensor 23. The noninverting output of the two-level sensor 23 of carburetor throttle pedal initial position is connected to the first input 21 of the current regulator 4 through a switch 26, comprising series-connected a first switching device 27 of analog signals and a fourth resistor 28. The positive clutch disengager 14 is connected to a third input 29 of the trigger device 19 of the single pulse generator 18. A switching device 30 comprises a second inverter 31 whose input is connected, through a fifth resistor 32. to the positive terminal 11 of the stabilized supply voltage unit 7. A second switch 33 of analog signals and a sixth resistor 34 are series-connected to the output of the second inverter 31. A first input 35 of a clutch interlocking control relay 36 is connected, through a readjustment unit 37 of the clutch interlocking control relay 36, to the outlet of the current amplifier 5. The output of the clutch interlocking control relay 36 is connected to the input of the switching device 30, to the first input of the trigger device 19 of the single pulse generator 18, and to a first input 39 of the AND gate 40, the inverting output of the two-level sensor 23 being connected to a second input 41 of the AND gate 40, and a second input 42 of the trigger device 19 of the single pulse generator 18 being connected to the output of the AND gate 40. The output of the switching device 30 is connected to the second input 22 of the current regulator 4. The output of the single-input frequency-to-analog converter 2 is connected to a second input of the clutch interlocking control relay 36. The single pulse generator trigger device 19 comprises an OR circuit 44 whose respective first, second, and third inputs 45, 46, 47 are connected to like inputs 38, 42, 29 of the trigger device 19 of the single pulse generator 18 though differentiating RC-circuits 48 and 49, 50 and 51, 52 and 53. The differentiating RC-circuit of the third input 47 of the OR circuit 44 is connected thereto through a third inverter 54, and the resistor 52 of said differentiating RC-circuit is connected to the positive terminal 11 of the stabilized supply voltage unit 7. The resistors 48 and 50 of the differentiating RC-circuits of the first and second inputs 45, 46 of the OR circuit 44 are connected to each other and to the intermediate terminal 13 of the stabilized supply voltage unit 7. Diodes 55, 56, 57 are connected parallel to the resistors 48, 50, 52.

Forasmuch as all the embodiments disclosed in the present invention have a number of common elements featuring similar mutual relations, only those elements and interrelations are described in the following disclosure of said embodiments which are specific for each of said embodiments.

In the disclosure of all the embodiments of the proposed device that hereinafter follows its elements performing the same functions and having similar construction arrangement are designated with like reference numerals.

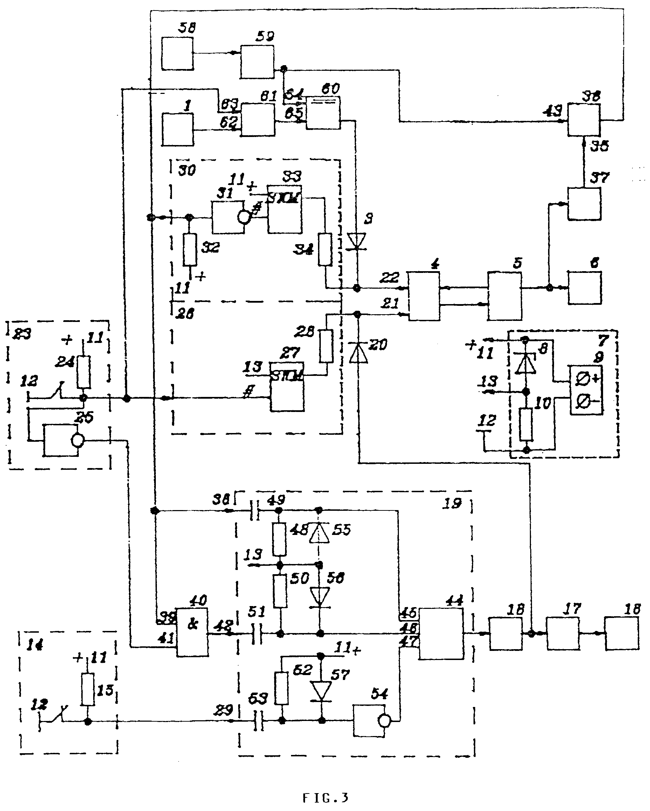

The embodiment of FIG.3 differs from the embodiment of FIG.1 in being additionally provided with a transport vehicle speed sensing unit 58, an additional single-input frequency-to-analog converter 59, and an adder 60. The aforementioned frequency-to-analog converter is in this case a double-input one and is indicated under Ref.No.61. The engine crankshaft angular velocity sensor 1 is connected to a first input 62 of the double-input frequency-to-analog converter, the noninverting output of the two-level sensor 23 being connected to a second input 63 of said converter. The transport vehicle speed sensing unit 58 is connected to the input of the additional frequency-to-analog converter 59 whose output is connected to a first input 64 of the adder 60. The output of the double-input frequency-to-analog converter 61 is connected to a second input 65 the adder 60 and the output of the adder 60 is connected to the input of the second diode 3. The second input 43 of the clutch interlocking control relay 36 is connected to the output of the additional frequency-to-analog converter 59.

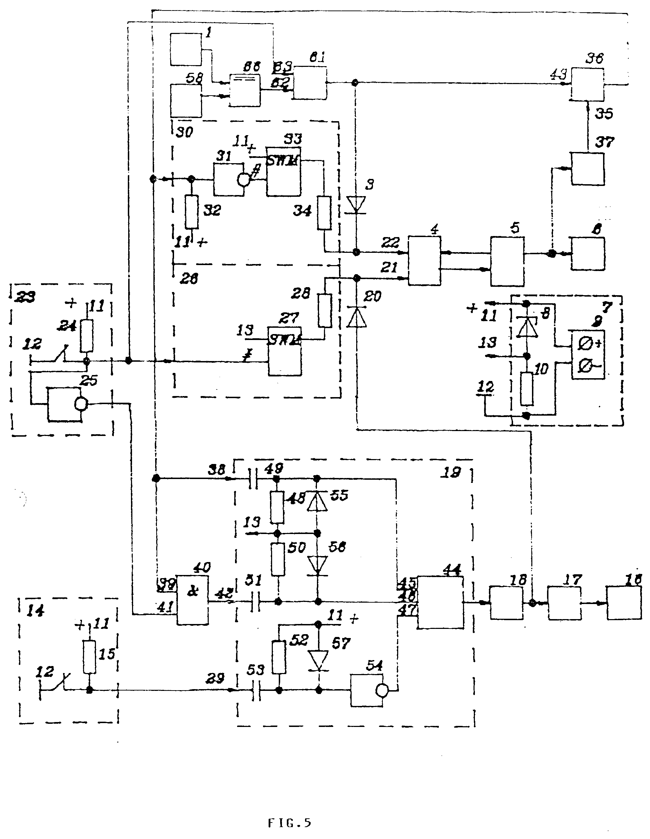

The device of FIG.5 differs from the device of FIG.1 in that it is additionally provided with a comparison circuit 66 and the transport vehicle speed sensing unit 58, and the frequency-to-analog converter 61 is a double-input one. The engine crankshaft angular velocity sensor 1 and the transport vehicle speed sensing unit 58 are in this case connected to the inputs of the comparison circuit 66 whose output is connected to the input 62 of the double-input frequency-to-analog converter 61 having its second input 63 is connected to the noninverting output of the two-level sensor 23 and its output connected to the second input 43 of the clutch interlocking control relay 36 and to the input of the second diode 3.

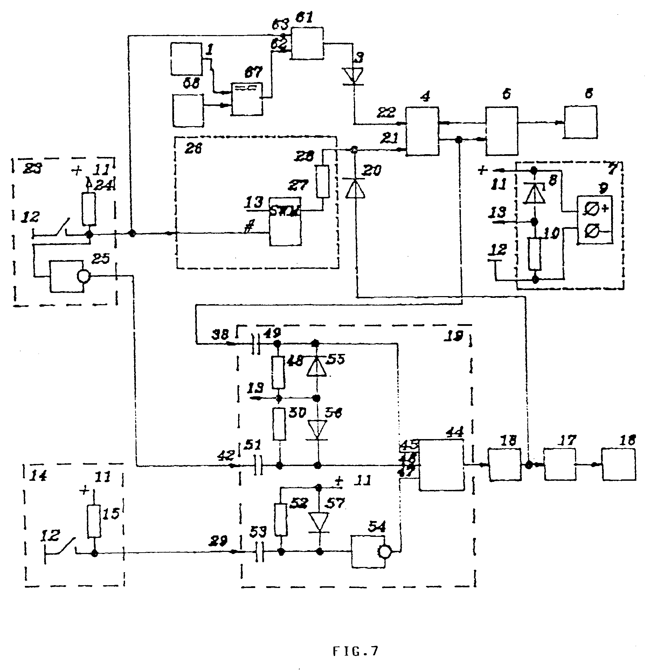

The device of FIG.7 is additionally provided with a comparator 67. Peculiar features of interrelation of the elements in this embodiment reside in that the engine crankshaft angular velocity sensor 1 and the transport vehicle speed sensing unit 58 are connected to the inputs of the comparator 67. The output of the comparator 67 is connected to the first input 62 of the double-input frequency-to-analog converter 61. Connected to the second input 63 of the frequency-to-analog converter 61 is the noninverting output of the two-level sensor 23. The output of the double-input frequency-to-analog converter 61 is connected to the input of the second diode 3. The output of the current regulator 4 is connected to the first input of the trigger device 19 of the single pulse generator 18. The inverting output of the two-level sensor 23 is connected to the second input of the trigger device 19 of the single pulse generator 18.

The device of FIG.1 operates as follows.

For convenience in describing the processes proceeding in the servo-solenoid coil, use is made in the text below of the proportionality factor (IW) representing magnetic properties of the material the servo-solenoid coil is made of and the number of the coil turns.

Running of the engine crankshaft causes formation of a pulse train at the output of the engine crankshaft angular velocity sensor 1, with a pulse repetition frequency directly proportional to the angular velocity ω_{cs} of the engine crankshaft.

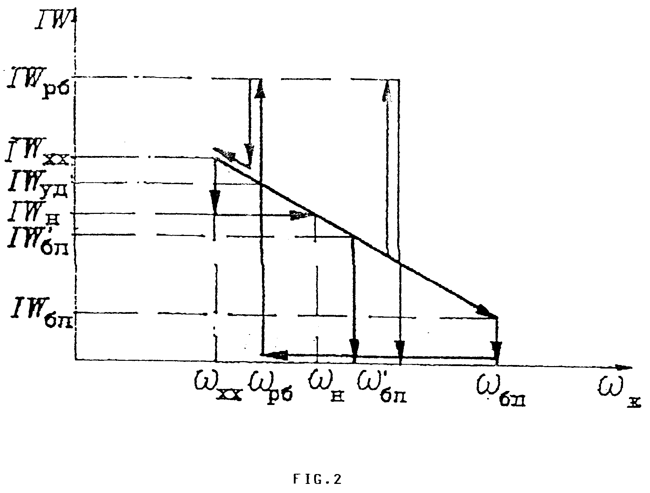

These pulses are applied to the input of the single-input frequency-to-analog converter 2 to be converted there into a d.c. voltage which controls the operation of the current regulator 4, with the result that current flowing along the control winding 6 is changed and hence is changed the factor IW of proportionality of the servo-solenoid from the value of IWᵢᵣ which corresponds to the angular velocity ωᵢᵣ of the engine crankcase idle run to the value of IVₗ corresponding to the angular velocity ωₗ of the clutch locking threshold (FIG.2).

As a result, the clutch friction elements smoothly approximate each other, thus ensuring getaway of the transport vehicle.

Once the value of angular velocity ω_{cs} of the engine crankshaft has become equal to that of ωₗ the clutch locking control relay 36 operates and its output acts on the second input 22 of the current regulator 4 through the switching device 30, causing the factor IV of proportionality of the servo-solenoid to reduce to zero, whereby a complete engagement of the clutch friction elements occurs, i.e., clutch locking.

This is accompanied by readjustment of the clutch locking control relay 36 so that said relay can return to the initial position not until the engine crankshaft angular velocity decreases to the value of ωᵤₗ.

This cuts down the time of clutch slipping and thereby adds to clutch durability.

As soon as the engine crankshaft angular velocity ω_{cs} decreases to the value of ωᵤₗ that corresponds to the clutch unlocking threshold, an isolated pulse is shaped at the output of the single-pulse generator 18 in response to a signal from the output of the clutch locking control relay 36 applied to the first input 38 of the trigger device 19 of the single-pulse generator 18, said isolated pulse acting on the switching current amplifier 17 and, through the first diode 20, on the current regulator 4 so that the proportionality factor IW in the control winding 6 and the forcing winding 16 of the servo-solenoid increases to a maximum value of IWᵤₗ, thus providing quick clutch disengagement.

Once the isolated pulse has disappeared, the servo-solenoid proportionality factor IW decreases to the value of IW_{hd}, wherein a reliable holding of the clutch in the disengaged position is ensured. Further reduction in the engine crankshaft angular velocity ω_{cs} to ωᵢᵣ results in a certain increase in the magnitude of the current passing through the servo-solenoid to the value of the proportionality factor equal to IWᵢᵣ, whereby the clutch is retained disengageωd.

The initial current of a gentle clutch engagement is generated with due account of the state of the two-level sensor 23 of carburetor throttle pedal initial position.

The process proceeds as follows.

Once the carburetor throttle pedal (not shown) has been depressed, the servo-solenoid proportionality factor IW decreases to the value of IWₛₑ corresponding to the start of a gentle clutch engagement. Further on, the value of IWₛₑ remains invariable as the current value ω_{cs} of the engine crankshaft angular velocity increases.

As soon as the angular velocity ω_{cs} of the engine crankshaft reaches the value of ωₛₑ further changing of the proportionality factor IW occurs depending on the engine crankshaft angular velocity ω_{cs} and does not differ from that described before.

Whenever gearshifting is performed in the course of the engine crankshaft acceleration, a positive clutch disengagement signal delivered from the positive clutch disengager 14 to the third input 29 of the trigger device 19 of the single pulse generator 18, causes the single-pulse generator 18 to operate so as to shape an isolated pulse at its output, the action of said pulse on the units of the device being described before.

As a result, the servo-solenoid proportionality factor IW increases to the value of IWᵤₗ.

In this case a low-level signal is shaped at the input of the readjustment unit 37 of the clutch locking control relay 36, said signal causes the clutch locking control relay 36 to readjust for changing over to the clutch locking at a lower engine crankshaft angular velocity ω'ᵢₗ in the range of ωᵤₗ < ω'ᵢₗ < ωᵢₗ.

When the engine crankshaft angular velocity ω_{cs} exceeds the value of ω'ᵢₗ, the clutch locking control relay 36 operates and the servo-solenoid proportionality factor IW drops down to zero.

When the engine crankshaft angular velocity ω_{cs} is below the value of ω'ᵢₗ, the servo-solenoid proportionality factor IW varies depending on the engine crankshaft angular velocity ω_{cs} from the value of IWᵢᵣ corresponding to the angular velocity ωᵢᵣ of the engine crankshaft idle running to the value of IWᵢₗ corresponding to the engine crankshaft angular velocity ω'ᵢₗ.

Once the engine crankshaft angular velocity ω_{cs} has become equal to the value of ωᵢₗ, the clutch locking control relay 36 operates and the servo-solenoid proportionality factor IW drops down to zero, that is, the clutch gets locked.

Operation of the device when gearshifting under steady-state transport vehicle motion conditions is the same as in the example discussed above.

Clutch control in situations concerned with release of the carburetor throttle pedal when the engine crankshaft angular velocity ω_{cs} falls within the range of ωᵤₗ < ω_{cs} < ωᵢₗ (e.g., with a view to braking or temporarily limiting the acceleration rate at lower gears) occurs as follows.

A low-level potential from the two-level sensor 23 of carburetor throttle pedal initial position (with the presence of a high-level potential from the output of the clutch locking control relay 36) is applied, through the first inverter 25 and the AND gate 40, to the second input 42 of the trigger device 19 of the single pulse generator 18 so as to initiate an isolated pulse at the output of the single-pulse generator 18, said pulse causing, as it has been described before, an increase in the servo-solenoid proportionality factor IW to a maximum value of IWᵤₗ, thus ensuring a re-unlocking cycle of the incompletely locked clutch in the range of the engine crankshaft angular velocity which is equal to ωᵤₗ < ω_{cs} < ωᵢₗ.

Thereby a possible engine stalling is prevented and, whenever necessary, a margin of the transport vehicle mass inertia is conserved during the vehicle acceleration.

In case of a failure of the electronic and electrical parts of the present device, clutch control is effected in a conventional mode with the aid of the clutch control pedal connected, through a cable drive, to the clutch release yoke (both not shown).

The device presented in FIG.3 operates as follows. With the engine crankshaft rotating, a pulse train is generated at the output of the engine crankshaft angular velocity sensor 1, with a pulse repetition frequency directly proportional to the engine crankshaft angular velocity ω_{cs}.

Said pulses are applied to the first input 62 of the double-input frequency-to-analog converter 61, wherein they are converted into a d.c. voltage and are delivered to the second input 65 of the adder 60.

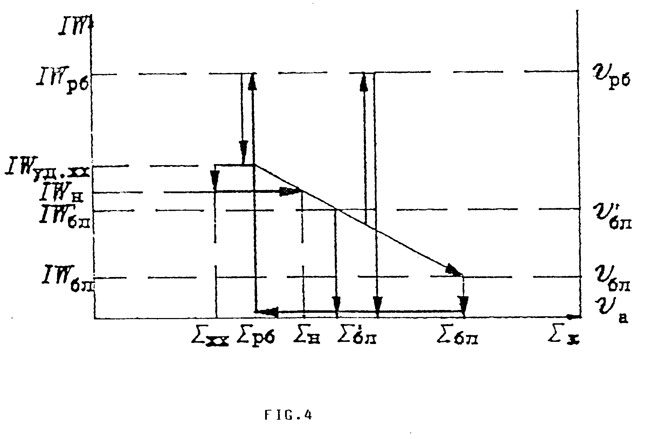

A voltage directly proportional to the transport vehicle traveling speed Vₐ (FIG.4) is applied to the first input 64 of the adder 60 from the additional frequency-to-analog converter 59 connected to the output of the transport vehicle speed sensing unit 58.

A signal from the adder 60 controls the operation of the current regulator 4, whereby the current passing along the control winding 6 and hence the servo-solenoid proportionality factor IW vary from the value of IWᵢᵣ corresponding to the sum 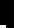 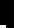 ᵢᵣ of the values of the angular velocity of transport vehicle crankshaft idle running and of the transport vehicle speed, to the value of IWᵢₗ that correspond to the sum 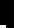 ᵢₗ of the engine crankshaft angular velocity and the transport vehicle speed of the clutch locking threshold.

As a result, the clutch friction members approach smoothly each other, thus enabling the transport vehicle to start away from rest.

Once the transport vehicle speed Vₐ has become equal to the value of Vᵢₗ, the clutch locking control relay 36 operates and its output acts on the second input 22 of the current regulator 4 through the switching device 30, causing the servo-solenoid proportionality factor IV to drop down to zero, whereby a complete engagement of the clutch friction elements occurs, i.e., clutch locking.

This is accompanied by readjustment of the clutch locking control relay 36 so that said relay can return to the initial position not until the transport vehicle speed decreases to the value of Vᵤₗ.

As soon as the transport vehicle speed Vₐ decreases to the value of Vᵤₗ that corresponds to the clutch unlocking threshold, an isolated pulse is shaped at the output of the single-pulse generator 18 in response to a signal from the output of the clutch locking control relay 36 applied to the first input 38 of the trigger device 19 of the single-pulse generator 18, said isolated pulse acting on the switching current amplifier 17 and through the first diode 20, on the current regulator 4 so that the proportionality factor IW in the control winding 6 and the forcing winding 16 of the servo-solenoid increases to a maximum value of IWᵤₗ, thus providing quick clutch disengagement.

Once the isolated pulse has disappeared, the servo-solenoid proportionality factor IW decreases to the value of IW_{hd}, wherein a reliable holding of the clutch in the disengaged position is ensured.

The initial current of a gentle clutch engagement is generated with due account of the state of the two-level sensor 23 of carburetor throttle pedal initial position.

The process proceeds as follows.

With the carburetor throttle pedal (not shown) released, a low-level voltage is delivered from the noninverting output of the two-level sensor 23 of carburetor throttle pedal initial position to the second input 63 of the double-input frequency-to-analog converter 61, with the result that its output voltage decreases, thus compensating for a possible voltage increase resultant from increased engine crankshaft angular velocity ω_{cs} due to a wrongly adjusted carburetor.

Once the carburetor throttle pedal has been depressed, a voltage is applied to the second input 63 of the double-input frequency-to-analog converter 61, enabling its operation in a definite mode.

In the normal vehicle starting-up mode the servo-solenoid proportionality factor IW drops down to the value of IWₛₑ of the start of smooth clutch engagement. Further on the value of IWₛₑ remains invariable as the current value of 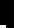 _{cs} increases. As soon as the value of 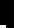 _{cs} reaches that of 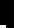 ₛₑ, further variation of the proportionality factor IW occurs depending on a total value of the engine crankshaft angular velocity and the transport vehicle speed and does not differ from that described before.

When gearshifting is performed in the course of the engine crankshaft acceleration a positive clutch disengagement signal delivered from the positive clutch disengager 14 located on the gearshift lever (not shown), to the third input 29 of the trigger device 19 of the single pulse generator 18, causes the single-pulse generator 18 to operate.

As a result, an isolated pulse is shaped at the output of the single-pulse generator 18, the action of said pulse on the units of the device being described before.

As a result, the servo-solenoid proportionality factor IW increases to the value of IWᵤₗ, and a low-level signal is shaped at the input of the readjustment unit 37 of the clutch locking control relay 36, said signal causes the clutch locking control relay 36 to readjust for changing over to the clutch locking mode in response to a signal sent by the speed sensing unit 58 of speed value of V'ᵢₗ in the range of Vᵤₗ < V'ᵢₗ < Vᵢₗ.

When the transport vehicle speed Vₐ exceeds the value of V'ᵢₗ, the clutch locking control relay 36 operates and the servo-solenoid proportionality factor IW drops down to zero.

When the transport vehicle speed Vₐ is below the value of V'ᵢₗ, the servo-solenoid proportionality factor IW changes depending on a change in the value of 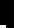 _{cs} in a manner described before.

Once the transport vehicle speed Vₐ has become equal to the value of V'ᵢₗ, the clutch locking control relay 36 operates and the servo-solenoid proportionality factor IW drops down to zero, that is, the clutch gets locked.

Operation of the device when gearshifting under steady-state transport vehicle motion conditions is the same as in the mode discussed above.

Clutch control in situations concerned with release of the carburetor throttle pedal when the clutch is locked incompletely and the values of 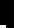 is within the range of
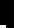 ᵤₗ < 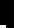 _{cs} < 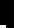 ᵢₗ (e.g., with a view to braking or temporary limiting of the acceleration rate at lower gears) occurs as follows.

A low-level potential from the two-level sensor 23 of carburetor throttle pedal initial position (with the presence of a high-level potential from the output of the clutch locking control relay 36) is applied, through the inverting output and the AND gate 40, to the second input 42 of the trigger device 19 of the single pulse generator 18 so as to initiate an isolated pulse at the output of the single-pulse generator 18, said pulse causing, as it has been described before, an increase in the servo-solenoid proportionality factor IW to a maximum value of IWᵤₗ, thus ensuring a re-unlocking cycle of the incompletely locked clutch in the range of 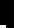 ᵤₗ < 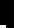 _{cs} < 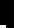 ᵢₗ.

Thereby a possible engine stalling is prevented and, whenever necessary, a margin of the transport vehicle mass inertia is conserved during the vehicle acceleration.

In case of a failure of the electronic and electrical parts of the present device, clutch control is effected in a conventional mode with the aid of the clutch control pedal connected, through a cable drive, to the clutch release yoke (both not shown).

The device presented in FIG.5 operates as follows.

With the engine crankshaft rotating, a pulse train is generated at the output of the engine crankshaft angular velocity sensor 1, with a pulse repetition frequency directly proportional to the engine crankshaft angular velocity ω_{cs}.

Said pulses are applied to the input of the comparison circuit 66, wherein they are compared with the pulses shaped by the transport vehicle speed sensing unit 58, the repetition frequency of said pulses being directly proportional to the transport vehicle speed Vₐ.

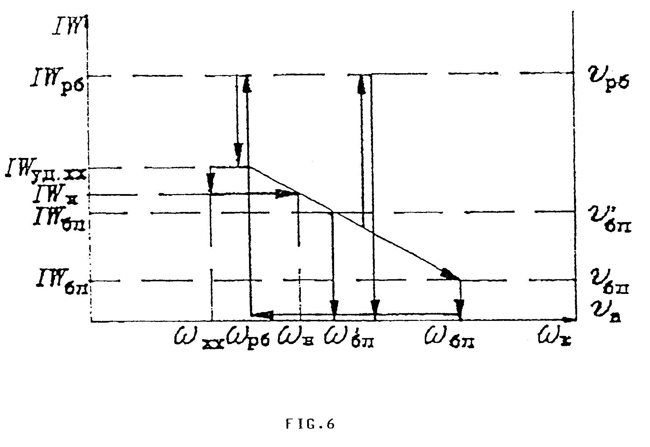

A pulse train from the output of the comparison circuit 66 is delivered to the first input 62 of the double-input frequency-to-analog converter 61, wherein the pulse train is converted into a d.c. voltage which controls the operation of the current regulator 4, with the result that the current passing along the control winding and hence the servo-solenoid proportionality factor IW from the value of IWᵢᵣ (FIG.6) corresponding to the angular velocity ωᵢᵣ of the engine crankshaft idle running to the value of IWᵢₗ that corresponds to the angular velocity ωᵢₗ at the clutch locking threshold.

As a result, the clutch friction members approach smoothly each other, thus enabling the transport vehicle to start away from rest.

Once the transport vehicle speed Vₐ has become equal to the value of Vᵢₗ that coincides to an accuracy of 10% with the reduced current value of the engine crankshaft angular velocity ω_{cs}, a voltage is established at the output of the double-input frequency-to-analog converter 61, having a value high enough for the clutch locking control relay 36 to operate, the output of the relay acting on the second input 22 of the current regulator 4 through the switching device 30, thus causing the servo-solenoid proportionality factor IV to drop down to zero, whereby a complete engagement of the clutch friction elements occurs, i.e., clutch locking.

This is accompanied by readjustment of the clutch locking control relay 36 so that said relay can return to the initial position not until the transport vehicle speed decreases to the value of Vᵤₗ.

As soon as the transport vehicle speed Vₐ decreases to the value of Vᵤₗ that corresponds to the clutch unlocking threshold, an isolated pulse is shaped at the output of the single-pulse generator 18 in response to a signal from the output of the clutch locking control relay 36 applied to the first input 38 of the trigger device 19 of the single-pulse generator 18, said isolated pulse acting on the switching current amplifier 17 and, through the first diode 20, on the current regulator 4 so that the proportionality factor IW in the control winding 6 and the forcing winding 16 of the servo-solenoid increases to a maximum value of IWᵤₗ, thus providing quick clutch disengagement.

Once the isolated pulse has disappeared, the servo-solenoid proportionality factor IW decreases to the value of IW_{hd}, wherein a reliable holding of the clutch in the disengaged position is ensured.

The initial current of a gentle clutch engagement is generated with due account of the state of the two-level sensor 23 of carburetor throttle pedal initial position.

The process proceeds as follows.

With the carburetor throttle pedal (not shown) released, a low-level voltage is delivered from the noninverting output of the two-level sensor 23 of carburetor throttle pedal initial position to the second input 63 of the double-input frequency-to-analog converter 61, with the result that its output voltage decreases, thus compensating for a possible voltage increase resultant from increased engine crankshaft angular velocity ω_{cs} due to a wrongly adjusted carburetor.

Once the carburetor throttle pedal has been depressed, a voltage is applied to the second input 63 of the double-input frequency-to-analog converter 61, said voltage enabling its operation in a definite mode.

In the normal vehicle starting-up mode the servo-solenoid proportionality factor IW drops down to the value of IWₛₑ of the start of smooth clutch engagement.

Further on the value of IWₛₑ remains invariable as the current value ω_{cs} of the engine crankshaft angular velocity increases.

As soon as the value of ω_{cs} of the engine crankshaft angular velocity reaches that of ..,ₛₑ, further variation of the proportionality factor IW occurs depending on the engine crankshaft angular velocity ω_{cs} and the transport vehicle speed, and differs in nothing from that described before.

When gearshifting is performed in the course of engine crankshaft acceleration, a positive clutch disengagement signal delivered from the positive clutch disengager 14 located on the gearshift lever (not shown), to the third input 29 of the trigger device 19 of the single pulse generator 18, causes the single-pulse generator 18 to operate. As a result, an isolated pulse is shaped at the output of the single-pulse generator 18, the action of said pulse on the units of the device has been described before.

As a result, the servo-solenoid proportionality factor IW increases to the value of IWᵤₗ.

In this case a low-level signal is shaped at the input of the readjustment unit 37 of the clutch locking control relay 36, said signal causes the clutch locking control relay 36 to readjust for changing over to the clutch locking mode in response to a signal sent by the speed sensing unit 58 of speed value of V'ᵢₗ in the range of Vᵤₗ < V'ᵢₗ < Vᵢₗ.

When the transport vehicle speed Vₐ exceeds the value of V'ᵢₗ, the clutch locking control relay 36 operates and the servo-solenoid proportionality factor IW drops down to zero.

When the transport vehicle speed Vₐ is below the value of V'ᵢₗ, the servo-solenoid proportionality factor IW changes depending on the engine crankshaft angular velocity ω_{cs} in a manner described before.

Once the transport vehicle speed Vₐ has become equal to the value of V'ᵢₗ, the clutch locking control relay 36 operates and the servo-solenoid proportionality factor IW drops down to zero, that is, the clutch gets locked.

Operation of the device when gearshifting occurs under conditions of steady-state transport vehicle motion is the same as in the mode discussed above.

Clutch control in situations concerned with release of the carburetor throttle pedal with the engine crankshaft angular velocity ω_{cs} is within the range of ωᵤₗ < ω_{cs} < ωᵢₗ (e.g., with a view to braking or temporarily limiting the acceleration rate at lower gears) occurs as follows.

A low-level potential from the two-level sensor 23 of carburetor throttle pedal initial position (with the presence of a high-level potential from the output of the clutch locking control relay 36) is applied, through the inverting output and the AND gate 40, to the second input 42 of the trigger device 19 of the single pulse generator 18 so as to initiate an isolated pulse at the output of the single-pulse generator 18, said pulse causing, as it has been described before, an increase in the servo-solenoid proportionality factor IW to a maximum value of IWᵤₗ, thus ensuring a re-unlocking cycle of the incompletely locked clutch in the range of ωᵤₗ < ω_{cs} < ωᵢₗ.

Thereby a possible engine stalling is prevented and, whenever necessary, a margin of the transport vehicle mass inertia is conserved during the vehicle acceleration.

In case of a failure of the electronic and electrical parts of the present device, clutch control is effected in a conventional mode with the aid of the clutch control pedal connected, through a cable drive, to the clutch release yoke (both not shown).

The device presented in FIG.7 operates as follows.

With the engine crankshaft rotating, a pulse train is generated at the output of the engine crankshaft angular velocity sensor 1, with a pulse repetition frequency directly proportional to the engine crankshaft angular velocity ω_{cs}.

Said pulses are applied to the input of the comparison circuit 67, wherein they are compared with the pulses shaped by the transport vehicle speed sensing unit 58, the repetition frequency of said pulses being directly proportional to the transport vehicle speed Vₐ.

A pulse train from the output of the comparison circuit 66 is delivered to the first input 62 of the double-input frequency-to-analog converter 61, wherein the pulse train is converted into a d.c. voltage which controls the operation of the current regulator 4, with the result that the current passing along the control winding 6 and hence the servo-solenoid proportionality factor IW are changed from the value of IWᵢᵣ corresponding to a total value 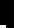 ᵢᵣ of the angular velocity of the engine crankshaft idle running and the transport vehicle speed, to the value of IWᵢₗ that corresponds to the value of 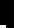 ᵢₗ at the clutch locking threshold.

As a result, the clutch friction members approach smoothly each other, thus enabling the transport vehicle to start away from rest.

Once the transport vehicle has started away from rest, the transport vehicle speed sensing unit 58 starts delivering pulses at a repetition frequency that increases with an increase in the transport vehicle speed Vₐ. Addition of pulses from the engine crankshaft angular velocity sensor 1 together with those from the transport vehicle speed sensing unit 58, a positive feedback being placed over said addition, provides first a quiet, then more and more sharp increase in the rate of change of the characteristic of approaching the friction clutch elements each other.

The process thus acquires an avalanche-type nature.

Once the transport vehicle speed Vₐ has become equal to the value of Vᵢₗ the voltage level at the output of the double-input frequency-to-analog converter 61, become high enough to cause the servo-solenoid proportionality factor IW to drop down to zero, whereby a complete engagement of the clutch friction elements occurs, i.e., clutch locking.

Clutch unlocking occurs when the voltage level at the output of the double-input frequency-to-analog converter 61 drops down to the value of Vᵤₗ equal to the value of Vᵢₗ, which becomes possible due to the fact that said voltage level corresponds to the lower limit of a stable engine operation on the move of the vehicle, which is impossible when the clutch is interlocked with the engine running.

The process proceeds as follows.

A signal from the output of the current regulator 4 is applied to the first input 38 of the trigger device 19 of the single pulse generator 18, with the result that an isolated pulse is shaped at the output of the single-pulse generator 18, said pulse acting on the switching current amplifier 17 and, through the first diode 20, to the current regulator 4 in such a manner that the servo-solenoid proportionality factor IW of the control winding 6 and the forcing winding 16 of the servo-solenoid increases to a maximum value of IWᵤₗ, whereby a quick clutch disengagement is provided.

Once the isolated pulse has disappeared, the servo-solenoid proportionality factor IW decreases to the value of IW_{hd}, wherein a reliable holding of the clutch in the disengaged position is ensured.

The initial current of a gentle clutch engagement is generated with due account of the state of the two-level sensor 23 of carburetor throttle pedal initial position.

The process proceeds as follows.

With the carburetor throttle pedal (not shown) released, a low-level voltage is delivered from the noninverting output of the two-level sensor 23 of carburetor throttle pedal initial position to the second input 63 of the double-input frequency-to-analog converter 61, with the result that its output voltage decreases, thus compensating for a possible voltage increase resultant from an increased engine crankshaft angular velocity ω_{cs} due to a wrongly adjusted carburetor.

Once the carburetor throttle pedal has been depressed, a voltage is applied to the second input 63 of the double-input frequency-to-analog converter 61, said voltage enabling its operation in a definite mode.

In the normal vehicle starting-up mode the servo-solenoid proportionality factor IW drops down to the value of IWₛₑ of the start of smooth clutch engagement.

Further on the value of IWₛₑ remains invariable as the current total value 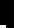 _{cs} of the engine crankshaft angular velocity and the transport vehicle speed increases.

As soon as the value of 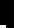 _{cs} reaches that of 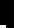 ₛₑ, further variation of the proportionality factor IW depends on the engine crankshaft angular velocity ω_{cs} and the transport vehicle speed Vₐ, and differs in nothing from that described before.

When gearshifting is performed in the course of engine crankshaft acceleration, a positive clutch disengagement signal delivered from the positive clutch disengager 14 located on the gearshift lever (not shown), to the third input 29 of the trigger device 19 of the single pulse generator 18, causes the single-pulse generator 18 to operate. As a result, an isolated pulse is shaped at the output of the single-pulse generator 18, the action of said pulse on the units of the device having been described before.

As a result, the servo-solenoid proportionality factor IW increases to the value of IWᵤₗ.

The system is readjusted for the clutch blocking mode in response to a signal V'ᵢₗ from the transport vehicle speed sensing unit 58.

When the transport vehicle speed Vₐ after gearshifting exceeds the value of V'ᵢₗ, the servo-solenoid proportionality factor IW drops down to zero.

When the transport vehicle speed Vₐ is below the value of V'ᵢₗ, the servo-solenoid proportionality factor IW changes depending on a change of 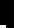 _{cs} in a manner described before.

Operation of the device when performing gearshifting under conditions of steady-state transport vehicle motion is the same as in the mode discussed above.

Clutch control in situations concerned with release of the carburetor throttle pedal when the clutch is locked incompletely in the range of 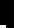 ᵤₗ < 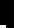 _{cs} < 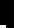 ᵢₗ (e.g., with a view to braking or temporarily limiting the acceleration rate at lower gears) occurs as follows.

A low-level potential from the two-level sensor 23 of carburetor throttle pedal initial position is applied, through the inverting output, to the second input 42 of the trigger device 19 of the single pulse generator 18 so as to initiate an isolated pulse at the output of the single-pulse generator 18, said pulse causing, as it has been described before, an increase in the servo-solenoid proportionality factor IW to a maximum value of IWᵤₗ, thus ensuring a re-unlocking cycle of the incompletely locked clutch in the range of 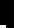 ᵤₗ < 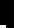 _{cs} < 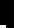 ᵢₗ.

Thereby a possible engine stalling is prevented and, whenever necessary, a margin of the transport vehicle mass inertia is conserved during the vehicle acceleration.

In case of a failure of the electronic and electrical parts of the present device, clutch control is effected in a conventional mode with the aid of the clutch control pedal connected, through a cable drive, to the clutch release yoke (both not shown).

### Industrial Applicability

The present invention can find application for automatic friction clutch control of transport vehicles.

## Claims

1. An automatic clutch control device of a transport vehicle, comprising an engine crankshaft angular velocity sensor (1) connected, through a frequency-to-analog converter (2), a current regulator (4), and a current amplifier (5), to the coil of a servo-solenoid having its armature operatively associated with a clutch actuating mechanism, and a positive clutch disengager (14) situated on a gearshift lever and connected to the servo-solenoid coil, CHARACTERIZED in that it is provided with a two-level sensor (23) of carburetor throttle pedal initial position, a switch element (26), a single pulse generator (18), a switching current amplifier (17), a trigger device (10) of a single pulse generator (18), a clutch locking control relay (36), a readjustment unit (37) of the clutch locking control relay (36), an AND gate (40), a first diode (20), a second diode (3), and a switching device (30); the frequency-to-analog converter (2) is a single-input one and the servo-solenoid coil has a control winding (6) and a forcing winding (16), of which the winding (16) is connected to the output circuit of the switching current amplifier (17) whose input is connected to the output of the single-pulse generator (18) having its input connected to the output of the trigger device (19) of the single pulse generator (18), the output of the single-pulse generator (18) is connected, through the first diode (20), to a first input (21) of the current regulator (4) whose second input (22) is connected, through the second diode (3), to the output of the single-input frequency-to-analog converter (2), the output of the current amplifier (5) is connected to the control winding (6) of the servo-solenoid coil, the noninverting output of the two-level sensor (23) of carburetor throttle pedal initial position is connected, through the switch element (26), to the first input (21) of the current regulator (4), a first input (35) of the clutch locking control relay (36) is connected, through the readjustment unit (37) of the clutch locking control relay (36), to the output of the current amplifier (5), while the output of the clutch locking control relay (36) is connected to the input of the switching device (30), to a first input (38) of the trigger device (19) of the single pulse generator (18), and to a first input (39) of the AND gate (40), to a second input (41) of which is connected the inverting output of the two-level sensor (23), connected to the output of the AND gate (40) is a second input (42) of the trigger device (19) of the single pulse generator (18), while connected to a third input (29) of the trigger device (19) of the single pulse generator (18) is the positive clutch disengager (14); the output of the switching device (30) is connected to the second input (22) of the current regulator (4), and the output of the single-input frequency-to-analog converter (2) is connected to a second input (43) of the clutch locking control relay (36).

2. An automatic clutch control device of a transport vehicle, comprising an engine crankshaft angular velocity sensor (1) connected, through a frequency-to-analog converter (61), a current regulator (4), and a current amplifier (5), to the coil of a servo-solenoid having its armature operatively associated with a clutch actuating mechanism, and a positive clutch disengager (14) situated on a gearshift lever and connected to the servo-solenoid coil, CHARACTERIZED in that it is provided with a two-level sensor (23) of carburetor throttle pedal initial position, a switch element (26), a single pulse generator (18), a switching current amplifier (17), a trigger device (19) of the single pulse generator (18), a clutch locking control relay (36), a readjustment unit (37) of the clutch locking control relay (36), an AND gate (40), a first diode (20), a second diode (3), a switching device (30), a transport vehicle speed-sensing device (58), an additional frequency-to-analog converter (50), and an adder (60); the frequency-to-analog converter (61) is a double-input one and the servo-solenoid coil has a control winding (6) and a forcing winding (16), of which the latter winding (16) is connected to the output circuit of the switching current amplifier (17) whose input is connected to the output of the single-pulse generator (18) having its input connected to the trigger device (10) of the single pulse generator (18), the output of the single-pulse generator (18) is connected, through a first diode (20), to the a first input (21) of the current regulator (4), the output of the current amplifier (5) is connected to the control winding (6) of the servo-solenoid coil, the noninverting output of the two-level sensor (23) of carburetor throttle pedal position is connected, through the switch element (26), to the first input (21) of the current regulator (4), a first input (35) of the clutch locking control relay (36) is connected, through the readjustment unit (37) of the clutch locking control relay (36), to the output of the current amplifier (5), while the output of the clutch locking control relay (36) is connected to the input of the switching device (30), to a first input (38) of the trigger device (19) of the single pulse generator (18), and to a first input (39) of the AND gate (40), to a second input (41) of which the inverting output of the two-level sensor (23) is connected, while connected to the output of the AND gate (40) is a second input (42) of the trigger device (19) of the single pulse generator (18), and connected to a third input (29) of the trigger device (19) of the single pulse generator (18) is the positive clutch disengager (14); the output of the switching device (30) is connected to the second input (22) of the current regulator (4), and a transport vehicle speed-sensing unit (58) is connected to the input of an additional frequency-to-analog converter (59) whose output is connected to a second input (43) of the clutch locking control relay (36) and to a first input (64) of the adder (60), while connected to a second input (65) of the adder (60) is the output of the double-input frequency-to-analog converter (61), and the output of the adder (60) is connected, through the second diode (3), to the second input (22) of the current regulator (4); the engine crankshaft angular velocity sensor (1) is connected to a first input (62) of the double-input frequency-to-analog converter (61), to the second input of which is connected the noninverting output of the two-level sensor (23).

3. An automatic clutch control device of a transport vehicle, comprising an engine crankshaft angular velocity sensor (1) connected, through a frequency-to-analog converter (61), a current regulator (4), and a current amplifier (5), to the coil of a servo-solenoid having its armature operatively associated with a clutch actuating mechanism, and a positive clutch disengager (14) situated on a gearshift lever and connected to the servo-solenoid coil, CHARACTERIZED in that it is provided with a transport vehicle speed sensing unit (58), a comparison circuit (66), a two-level sensor (23) of carburetor throttle pedal initial position, a switch element (26), a single pulse generator (18), a switching current amplifier (17), a trigger device (19) of a single pulse generator (18), a clutch locking control relay (36), a readjustment unit (37) of the clutch locking control relay (36), an AND gate (40), and a switching device (30); the frequency-to-analog converter (61) is a double-input one and the servo-solenoid coil has a control winding (60) and a forcing winding (16), of which the latter winding (16) is connected to the output circuit of the switching current amplifier (17) whose input is connected to the output of the single-pulse generator (18) having its input connected to the output of the trigger device (19) of the single pulse generator (18), the output of the single-pulse generator (18) is connected, through the first diode (20), to the first input (21) of the current regulator (4), the second input (22) of which is connected, through the second diode (3), to the output of the double-input frequency-analog converter (61), the output of the current amplifier (5) is connected to the control winding (6) of the servo-solenoid coil, the noninverting output of the two-level sensor (23) is connected, through the switch element (26), to the first input (21) of the current regulator (4), a first input (35) of the clutch locking control relay (36) is connected, via the readjustment unit (37) of the clutch locking control relay (36), to the output of the current amplifier (5), while the output of the clutch locking control relay (36) is connected to the input of the switching device (30), to a first input (38) of the trigger device (19) of the single pulse generator (18), and to a first input (39) of the AND gate (40), to the second input of which is connected the inverting output of the two-level sensor (23), while connected to the output of the AND gate (40) is a second input (42) of the trigger device (19) of the single pulse generator (18), and connected to a third input (29) of the trigger device (19) of the single pulse generator (18) is the positive clutch disengager (14); the output of the switching device (30) is connected to the second input (22) of the current regulator (4), while the engine crankshaft angular velocity sensor (1) and the transport vehicle speed-sensing unit (58) are connected to the inputs of the comparison circuit (66) whose output is connected to a first input (62) of the double-input frequency-to-analog converter (61) a second input (63) of which is connected to the noninverting output of the two-level sensor (23), and the output of the converter (61) is connected to a second input (43) of the clutch locking control relay (36).

4. An automatic clutch control device of a transport vehicle, comprising an engine crankshaft angular velocity sensor (1) connected, through a frequency-to-analog converter (61), a current regulator (4), and a current amplifier (5), to the coil of a servo-solenoid having its armature operatively associated with a clutch actuating mechanism, and a positive clutch disengager (14) situated on a gearshift lever and connected to the servo-solenoid coil, CHARACTERIZED in that it is provided with a transport vehicle speed sensing unit (58), a comparator (67), a two-level sensor (23) of carburetor throttle pedal initial position, a switch element (26), a single pulse generator (18), a switching current amplifier (17), and a trigger device (19) of the single pulse generator (18); the frequency-to-analog converter (61) is a double-input one and the servo-solenoid coil has a control winding (6) and a forcing winding (16), of which the latter winding (16) is connected to the output circuit of the switching current amplifier (17) whose input is connected to the output of the single-pulse generator (18) having its input connected to the output of the trigger device (19) of the single pulse generator (18), the output of the single-pulse generator (18) is connected, through a first diode (20), to a first input (21) of the current regulator (4), a second input (22) of which is connected, through a second diode (3), to the output of the double-input frequency-analog converter (61), the output of the current amplifier (5) is connected to the control winding (6) of the servo-solenoid coil, the noninverting output of the two-level sensor (23) is connected, through the switch element (26), to the first input (21) of the current regulator (4) whose output is connected to a first input (38) of the trigger device (19) of the single pulse generator (18), the inverting input of the two-level sensor (23) is connected to a second input (42) of the trigger device (19) of the single pulse generator (18), the positive clutch disengager (14) is connected to a third input (29) of the trigger device (19) of the single pulse generator (18); the engine crankshaft angular velocity sensor (1) and the transport vehicle speed sensing unit (58) are connected to the inputs of the comparator (67) whose output is connected to a first input (62) of the double-input frequency-to-analog converter (61), to a second input of which is connected the noninverting output of the two-level sensor (23) of the carburetor throttle pedal initial position.
